# EUROPÄISCHE PATENTANMELDUNG

(11) **EP 3 031 512 A1**
(43) Veröffentlichungstag der Anmeldung: **15.06.2016**
(21) Anmeldenummer: 15198335.0
(22) Anmeldetag: 08.12.2015
(51) Int. Cl.: B01D 53/26, B01D 63/06, B01D 71/02, B01D 71/36, B01D 71/38, B01D 71/68, F28F 3/00, F24F 3/147, F28D 21/00, F24H 3/06

(54) **WÄRME- UND FEUCHTEÜBERTRAGER**

(30) Priorität: 11.12.2014 DE 102014225544
(71) Anmelder: Vaillant GmbH, 42859 Remscheid (DE)
(72) Erfinder: Eichholtz, David, 44789 Bochum (DE); Badenhop, Thomas, 51688 Wipperfürth (DE)
(74) Vertreter: Popp, Carsten

(57) **Zusammenfassung**

Bei Wärme- und Feuchteübertrager 7 zur Übertragung von thermischer Energie und Feuchte von einem ersten Medium in Form eines wasserdampfhalteigen Abgas Medium auf ein zweites Medium in Form von Raumluft, mit mindestens einem ersten Strömungskanal für das erste Medium und mindestens einem zweiten Strömungskanal für das zweite Medium, ist zwischen dem ersten Strömungskanal und dem zweites Strömungskanal zumindest in Teilbereichen eine wasserdampfdurchgängige Membran 5 angeordnet.

## Beschreibung

Die Erfindung bezieht sich auf eine Vorrichtung zur Feuchterückgewinnung vorzugsweise in Kombination mit einer brennstoffbetriebenen Heizungsanlage und einer raumluftechnischen Anlagen.

Zur Reduktion des Primärenergiebedarfes der Häuser bis hin zum Null-Energiehaus werden Gebäuden in Europa immer besser gedämmt. Insbesondere in den Wintermonaten nimmt die Luftfeuchtigkeit in den Räumen ab. Diese ist ein wichtiger Faktor für das Wohlbefinden und die Gesundheit der Menschen, die in den Räumen arbeiten oder leben. Als kritische Grenze ist eine relative Luftfeuchtigkeit kleiner 40% in der Literatur angegeben. Untersuchungen zeigen die Wirkungsfelder zu geringer Luftfeuchtigkeit auf die Gesundheit:
- Die Schleimhäute des Atmungstraktes (Nase, Bronchien, Lunge) erfüllen eine wichtige Schutzfunktion, welche von der Luftfeuchtigkeit der Umgebung entscheidend beeinflusst wird. Bei relativen Luftfeuchtigkeiten kleiner 20% ist diese Schutzfunktion nicht mehr gegeben und die Gefahr der Erkrankung oder von Atemwegsinfektionen steigt hierdurch an.
- Darüber hinaus ist eine zu geringe relative Luftfeuchtigkeit an der Entstehung von Stimmstörungen beteiligt. Häufigste Symptome sind Trockenheit im Rachen und Kehlkopf, vermehrtes Räuspern und Heiserkeit.
- Auch geschwollene Augenlider, Rötungen, Fremdkörpergefühl, Brennen und hohe Lichtempfindlichkeit können Folgen zu niedriger Luftfeuchtigkeit sein.

### Stand der Technik

Typische Maßnahmen, damit die Luftfeuchtigkeit in den Wintermonaten in den Räumen nicht zu stark absinkt beziehungsweise konstant gehalten werden kann, sind:
- Stoßlüftung
- Räume nicht überheizen
- Ausreichend trinken
- Zusätzliche Feuchtigkeit in die Räume einbringen

### Raum-Luft-Technische-Anlagen (RLT)

In Ein- und Mehrfamilienhäusern werden bei einer Sanierung immer häufiger Lüftungsanlagen nachgerüstet. Eines der Ziele ist hierbei die notwendige Luftwechselrate nach Norm einzuhalten und das Gebäude vor zu hoher Luftfeuchtigkeit zu schützen, da dies zu Schimmelbildung führen kann. Andererseits ist eine entsprechende Feuchtigkeit der Raumluft zu zu führen.

In Neubau insbesondere bei Passivhäusern wird eine RLT-Anlagen in der Regel eingebaut, da hierbei die Gebäudehülle zu dicht ist, um eine Mindest-Frischluftmenge durch Infiltration zu gewährleisten.

Um den Wirkungsgrad von RLT-Anlagen zu erhöhen, werden standartmäßig Wärmeübertrager eingesetzt, welche die Wärme in der Abluft (Fortluft) auf die Frischluft (Zuluft) übertragen (Abluft wird abgekühlt, Zuluft wird erwärmt). Die erzeilbaren Wirkungsgrade dieser Rekuperation betragen etwa 94%.

Weiterhin kann statt einem standartmäßigen Wärmeübertrager auch ein Enthalpietauscher oder auch ein Sorptionsrad eingesetzt werden; dieser überträgt einen Teil der Wärme (bis zu 80%) als auch einen Teil der Feuchtigkeit (bis zu 60-70%) aus der Abluft hinüber auf die Frischluft.

Mit raumlufttechnischen Anlagen kann die Zuluft zu den Räumen entsprechend auf die Bedürfnisse der Nutzer konditioniert werden. So kann über eine solche Anlage die Luft auch befeuchtet werden. Im Stand der Technik sind verschiedene Konzepte dazu vorgeschlagen worden:
- Aktive Befeuchtung
- Passive Befeuchtung

Bei der aktiven Befeuchtung wird Wasser verdampft und dem Raum zugeführt. Diese Methode ist sehr effektiv, aber energetisch aufwendig und meist kostenintensiv.

Durch die Nutzung der Räume entsteht Feuchtigkeit, zum Beispiel durch Schwitzen oder Kochen. Diese Feuchtigkeit verlässt mit der Fortluft der raumluftechnischen Anlage das Gebäude ungenutzt. Techniken der passiven Befeuchtung entfeuchten die Fortluft der raumlufttechnischen Anlage und führen die Feuchtigkeit der Zuluft zu. Im Stand der Technik sind im Wesentlichen zwei Methoden zur Entfeuchtung vorgeschlagen worden:
a) Entfeuchtung mit Sorptionsrotoren
b) Entfeuchtung mit Membrantrennstufen

### a) Sorptionsrotor

Die wabenartig aufgebaute Rotormasse dreht sich kontinuierlich zwischen einem warmem Abluft- und einem kaltem Außenluftstrom. Der kalte Außenluftstrom wird im Abluftstrom erwärmt und überträgt die Energie auf den kalten Zuluftstrom. Bis zu 80% der in der Abluft enthaltenen Wärme und Feuchtigkeit können so zurückgewonnen werden. Die Feuchtigkeitsrückgewinnung basiert auf der Adsorption des Wasserdampfs an der Rotormasse im Abluftkanal und das Wasser desorbiert im Zuluftkanal und führt so zu einer Anhebung der Luftfeuchtigkeit im Zuluftstrom. Dabei wir der Wasserdampfpartialdruckunterschied zwischen Ab- und Zuluft als Triebkraft ausgenutzt. Zusätzlich kann die Zuluft stromaufwärts des Rotor erwärmt werden, um den Desorptionsprozess zu verbessern, um dem Prozess eine weitere Triebkraft aufzuprägen. Diese Aufprägung ist kontraproduktiv zur gewünschten Wärmerückgewinnung zu sehen.

Als sorptionsaktive Komponenten werden Silicagele oder Zeolithe, vorzugsweise Linde Typ A Zeolithe, z.B. 3 oder 4A Zeolithe oder Faujasite, z.B. NaX-Zeolithe verwendet.

### b) Wasserdampfdurchgängige Membrantrennstufen

Aus der Patentanmeldung DE 10055612 A1 ist eine anorganische Membran zur Stofftrennung bekannt. Die EP 1071914 B1 und die EP 661502 A2 offenbaren eine Einrichtung zum Austausch von Wärme und Feuchtigkeit zwischen zwei Gasströmen mit einer wasserdampfdurchlässigen Membran. Ferner sind Membranen bekannt aus der US 2008/0034966 A1, US 2012/0061045 A1 und US 2014/0238235 A1.

Wasserdampfdurchgängige Membrantrennstufen oder auch Enthalpieaustauscher genannt, nutzen wie Sorptionsrotoren auch den Wasserdampfpartialdruck zwischen Ab- und Zuluft für den Stofftransport aus. Dabei ist die Membran so gestaltet, dass nur die dampfförmigen Wassermoleküle passieren können. Neben dem Stofftransport erfolgt auch ein Wärmetransport durch Konvektion des Wasserdampfes sowie Wärmeleitung durch die Membran. Typischerweise werden solche Membranen aus Cellulose oder Polymerfolien aufgebaut. Durch Mikro- und Nanostrukturierung kann der Stofftransport solcher Membranen verbessert werden (vgl. WO 2012/167366 A1 "selective water vapor transport membranes comprising Nanofibers layer and methods for making the same" Ryan Huizing et.al.)

Für Trennungen auf molekularer Ebene, wie z.B. der Trennung von Gasen, der Pervaporation und/oder der Dampfpermeation, werden bislang meist Membranen auf der Basis organischer Polymere verwendet. Dabei zeigen eine ganze Reihe dieser Materialien für die jeweilige Trennaufgabe positive Eigenschaften mit akzeptablen Trennfaktoren und guten Permeationsleistungen. Nachteilig ist bei diesen Polymermembranen allerdings deren kurze Lebensdauer. Ursache für diese kurze Lebensdauer ist vor allem die Empfindlichkeit der Polymermembrane gegenüber Lösungsmitteln, die das Membranmaterial quellen lassen oder zerstören, und die niedrige Temperaturbeständigkeit der Polymermembrane.

Ein weiterer Nachteil von cellulose- und polymerbasierten Membranen ist, dass diese von Krankheitserregern besiedelt werden können. Insbesondere Bakterien, wie Listeria, E. coli, Salmonellen, sowie Staphylococcus aureus (S. aureus) und MRSA (Methicillin-resistant Staphylococcus aureus) stellen hier eine besondere Gefahr dar, aber auch anderen Mikrobenstämme können zu einer Besiedelung der Membranoberfläche führen und diese verstoffwechseln.

Neben organischen Membranen sind aus der Literatur auch anorganische Membranen, z.B. Zeolith-Membranen bekannt, die für den Einsatz als wasserdampfdurchgängige Membranen für diese Anwendung in Betracht kommen. Diese anorganischen Membranen sind für den Einsatz in der petrochemischen Industrie oder Gaseindustrie entwickelt worden. Werde jedoch nicht, wie organische Membrane von Bakterien und Erregern besiedelt.

In jüngerer Zeit werden häufig keramische Membrane eingesetzt, die eine erheblich größere Lebensdauer aufweisen, da sie, im Gegensatz zu den Polymermembranen, je nach Zusammensetzung der Keramik gegenüber organischen Verbindungen, Säuren oder Laugen weitestgehend inert sind und außerdem eine höhere Temperaturbeständigkeit aufweisen. Die keramischen Membranen können demnach auch chemisch oder thermisch gereinigt werden.

Mordenit ist ein eher selten vorkommendes Mineral aus der Mineralklasse der "Silikate und Germanate". Es kristallisiert im orthorhombischen Kristallsystem mit der chemischen Zusammensetzung (Na₂,Ca,K₂)4(Al₈Si₄₀)O₉₆·28H₂O, wobei die in den runden Klammern angegebenen Elemente Natrium, Calcium und Kalium bzw. Aluminium und Silicium sich in der Formel jeweils gegenseitig vertreten können (Substitution, Diadochie), jedoch immer im selben Mengenverhältnis zu den anderen Bestandteilen des Minerals stehen. Aus diesem Mineral lassen sich Membranen aufbauen, die als trennaktive Schicht eine Schicht aus Kristallen mit Molekularsiebeigenschaften aufweist.

Die Herstellung solcher Materialien bzw. Materialkombinationen für Membranen wird z.B. in den PCT- Anmeldungen WO 96/00198, WO 99/15262 oder WO 99/15272 beschrieben. All diese Materialien basieren auf Verbundwerkstoffen, die ein anorganisches bzw. keramisches Material aufgebracht auf einen porösen Träger aufweisen. Die Verbundwerkstoffe weisen als Basis zumindest einen durchbrochenen und stoffdurchlässigen Träger auf. Auf zumindest einer Seite des Trägers und im Inneren des Trägers weist der Träger zumindest eine anorganische Komponente auf, die im Wesentlichen zumindest eine Verbindung aus einem Metall, einem Halbmetall oder einem Mischmetall mit zumindest einem Element der 3. bis 7. Hauptgruppe aufweist. Unter dem Inneren eines Trägers werden die Hohlräume oder Poren in einem Träger verstanden.

### Abgasrohr

Für Brennwertanlagen werden in der Regel doppelwandige Abgasrohre verwendet. Im Kernkanal wird das Abgas an die Atmosphäre abgegeben. Zwischen dem Inneren und dem Äußeren Abgasrohr wird Zuluft dem Gerät zugeführt. Die Abgasrohre können aus Kunststoff oder Metall ausgeführt werden, müssen jedoch den Temperaturanforderungen standhalten und resistent gegen Kondensat sein.

### Heizungsanlage

Das Abgas, dass den Wärmeerzeuger verlässt, ist auch bei der Brennwerttechnik weiterhin energiereich mit einer Temperatur <50°C und ist zudem gesättigt (100 % rel. Abgasfeuchtigkeit). Mit dem Abführen des Abgases an die Atmosphäre verlässt diese Energie und Feuchtigkeit die Gebäudehülle.

Ziel der Erfindung ist es daher, eine ausreichende Befeuchtung von Räumen zu gewährleisten. In der Gebäudehülle sollte eine relative Luftfeuchtigkeit zwischen 35% und 60% aufweisen; dies entspricht dem Wohlfühlbereich nach Norm DIN 1946-6.

Das vorgeschlagene Verfahren soll einen Wärmeerzeuger, der mit Kohlenwasserstoffen (z.B. Erdgas) betrieben wird mit einer raumluftechnischen Anlage (RLT) verbinden, um zusätzliche Luftfeuchtigkeit für die Räume gerade in de Wintermonaten bereitzustellen, ohne die primärenergetische Effizienz des Gebäudes nachhaltig negativ zu beeinflussen.

Bei der Verwendung eines standardmäßigen Wärmeübertragers in einer raumlufttechnischen Anlage kommt es an trockenen Tagen zu einer Entfeuchtung der Raumluft, da die abgeführte Feuchtigkeit in der Abluft nicht zurückgewonnen wird.

Trockene Tage treten in der Regel an kühlen Wintertagen auf, die absolute Feuchte der Außenluft sinkt hierbei teilweise auf 1 g/kg Luft.

Auch bei Einsatz eines Enthalpietauschers oder Sorptionsrades in der raumlufttechnischen Anlage kann nur rund 60-70% der Feuchtigkeit in der Abluft zurückgewonnen werden. Dementsprechend kann es auch hierbei zu einer Entfeuchtung der Raumluft kommen, falls durch innere Feuchtelasten dieses nicht kompensiert werden kann.

Um eine Entfeuchtung zu vermeiden, kann neben der passiven Möglichkeit (Enthalpietauscher oder Sorptionsrad) auch beispielsweise mit Elektrodendampfbefeuchter, Ultraschallbefeuchter, Sprühdüsenkammer, Rieselbefeuchter und so weiter aktiv zubefeuchtet werden. Nachteilig an den vorgenannten Techniken ist, dass diese energieaufwendig sind und die notwendige Verdampfungsenthalpie für den Phasenwechsel des Wasser von außen aufgebracht werden muss.

Wie bereits im Stand der Technik ausgeführt, enthält das Abgas eines Brennwert-Heizgerätes oder eines Motor-BHKWs noch eine relative hohe Restgasfeuchtigkeit. Typischerweise liegt diese bei 100% (Sättigungszustand) stromabwärts des Kondensations- oder Brennwertwärmeübertragers.

### Gegenstand der Erfindung

Die Kernidee dieser Erfindung ist, dass die im Abgas befindliche Gasfeuchte auf die Zuluft übertragen wird ohne jedoch andere Abgasbestandteile mit zu übertragen. Somit muss keine Verdampfungsenthalpie mehr extern aufgebracht werden, um die Zuluft einer RLT anzufeuchten. Darüber hinaus wird das Abgas teilweise entfeuchtet, so dass die Gefahr der Versottung des Kamins abnimmt.

Es wird vorgeschlagen, dass eine wasserdampfdurchgängige Membran eingesetzt wird, um den Dampf von der Abgasseite auf die Zuluftseite der RLT zu übertragen. Hierzu kann ein Enthalpietauscher, der im Gegenstromprinzip betrieben wird eingesetzt werden.

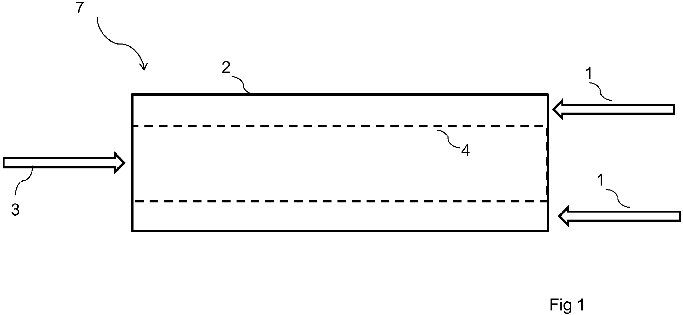

Unterschiedliche Ausführungen sind denkbar:
1.) Es wird ein Plattenwärmeübertrager (Gas/Gas) eingesetzt.
   Plattenwärmetauscher, bei denen Blechplatten alternierend ein Gas von einem anderen trennt, sind aus dem Stand der Technik bekannt. Erfindungsgemäß verfügt der Wärmetauscher über Trennwände aus wasserdampfdurchgängigen Membranen, welche auf einer Trägerstruktur aufgebracht oder an den Kanten des Wärmetauschers gespannt sind. Primärseitig wird der Wärmetauscher mit dem Abgas durchströmt. Sekundärseitig wird kalte Außenluft durchgeleitet. Es findet dabei eine Übertragung der Enthalpie mittels Feuchtigkeitsübertragung und Temperaturaustausch statt. Hierbei können hohe Übertagungsleistungen gerade bei Anwendung des Gegenstromprinzips erreicht werden.
2.) Es wird ein präpariertes Abgasrohr eingesetzt
   Figur 1 zeigt ein koaxiales Abgasrohr 7, wie es in der Brennwerttechnik für die Abfuhr von Abgasen 3 und die Zufuhr von frischer Verbrennungsluft üblich ist. Im Gegensatz zu üblichen koaxialen Abgasrohren ist das innere Rohr 4 aus einer wasserdampfdurchgängigen Membran gebildet. Im inneren Rohr 4 wird Abgas 3 einer konventionellen, brenngasbetriebenen Heizungsanlage oder einer anderen abgasproduzierenden Anlage, zum Beispiel einer Brennstoffzelle, abgeführt. Zwischen dem äußeren Rohr 2 des koaxialen Abgasrohrs 7 und dem inneren Rohr 4 wird frische Außenluft 1 gefördert, die in eine Raum-Luft-Technische-Anlagen gelangt und der Raumluft zugeführt wird.

Zur Herstellung werden im inneren Rohr Teilstücke entfernt oder auf der gesamten Länge mit einer wasserdampfdurchlässigen Membran ausgestattet, d.h. die wasserdampfdurchlässige Membran bilden mit einer Stützkonstruktion das Innenrohr 4. Hierbei muss zwingend auf die Verbindungstechnik des Rohres und der Membran geachtet werden, um eine Leckage zwischen den beiden Medien zu verhindern. Mögliche Verbindungtechniken sind Kleben, Verschweißen, Klemmverbindung mit/ohne zusätzlicher Dichtung, Verschrauben usw.

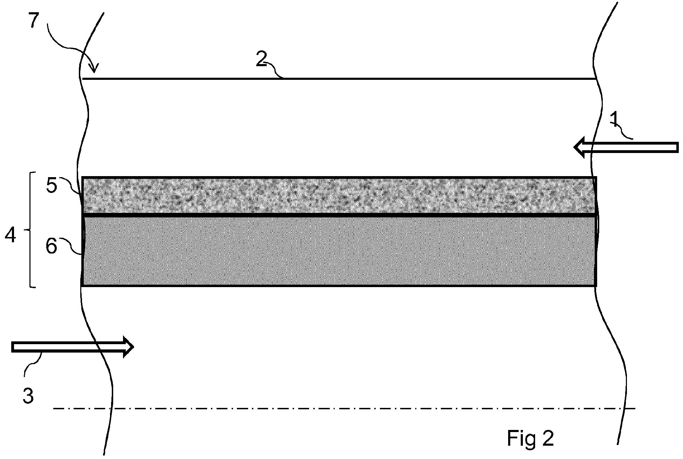

Figur 2 zeigt einen Ausschnitt aus dem koaxialen Abgasrohr 7 aus Figur 1. Die Membran besteht aus einer trennaktiven Schicht 5 und einer Stützschicht 6. Die Stützschicht 6 oder Trägerschicht ist offen-porös für einen verbesserten Stofftransport, wobei die Poren > 4 nm sind, um Knudsen-Diffusion zu vermeiden und damit der Wasserdampf ungehindert diese Stützschicht passieren kann. Die Aufgabe der Stützschicht 6 ist die mechanischen Belastung aufzunehmen. Diese Stützschicht 6 wird vorzugweise aus einem keramischen, metallischen oder polymeren Schaum gebildet. Das stoffdurchlässige Trägermaterial kann auch mit den Komponenten einer Zeolith-Syntheselösung und/oder einer Syntheselösung für amorphe Mischmetalloxide, Silikalite, Aluminiumsilikate oder Aluminiumphosphaten gebildet werden.

Des Weiteren kann die keramische Stützschicht 6 beispielsweise aus Siliziumkarbid oder Alumosilikate gebildet werden. Eine metallische Stützstrukur als Schaum ausgebildet, ist vorzugsweise in Edelstahl ausführen. Polymere Stützstrukturen werden als Schäume beispielsweise aus Polyamid, Polyurethan oder Polyurethan-Polyeether oder Polyphenylensulfid gebildet.

Neben Schäumen können auch Vliese, Gestricke und andere meso-poröse Strukturen als Trägerstruktur in Betracht kommen. Als mesoporöse Struktur wird hier das Material MCM 41 vorgeschlagen.MCM-41 (Mobil Composition of Matter No. 41) ist ein mesoporöses Material mit hierarchischer Porenstruktur aus einer Familie von silikatischen und alumosilikatischen Feststoffen. MCM-41 besitzt eine regelmäßig hexagonale Anordnung von zylindrischen Mesoporen, die ein eindimensionales Porensystem bilden. Es zeichnet sich durch einen einstellbaren Porendurchmesser, eine scharfe Porenradienverteilung, eine große Oberfläche und ein großes Porenvolumen aus. Die Poren sind größer als bei Zeolithen und die Porengrößenverteilung kann leicht eingestellt werden. Die Mesoporen haben einen Durchmesser von 2 nm bis 6,5 nm.

Die trennaktive Schicht 5 kann sowohl organischer als auch anorganischer Natur sein. Als organische trennaktive Schichten für den Wasserdampfdurchgang werden Polyetheretherketone (PEEK), Polytetrafluorethylene (PTFE) sowie sulfoniertes Tetrafluorethylen-Polymere vorgeschlagen. Auch perfluorierte sulfonierte acide Polymere sind als trennaktive Schicht 5 geeignet. Auch aus vernetzten und/oder nanostrukturierten Polyurethan-Polyeethern kann eine geeignete Membran gebildet werden.

Die erfindungsgemäße anorganische Membran besteht aus anorganischen Bestandteilen und zeichnet sich durch eine große Stabilität gegenüber Säuren und hohen Temperaturen aus, wobei die trennaktive Schicht 5 einer Verbindung aus der Gruppe der Zeolithe, amorphen Mischmetalloxide, Silikalite, Aluminiumsilikate oder Aluminiumphosphate auf die Keramikfolie (Trägermaterial) synthetisiert wird, wobei die Poren der trennaktiven Schicht kleiner 10 nm, vorzugsweise 1 nm, 0,3 nm, 0,4 nm und 0,5nm sind. Die erfindungsgemäße Membran kann zur Wasserdampfpermeation eingesetzt werden. Die trennaktive Schicht ist dabei kristallin aufgebaut und weist durch ihren Aufbau Molekularsiebeigenschaft auf.

Die Membran ist dadurch gekennzeichnet, dass die trennaktive Schicht zumindest eine kristalline Verbindung aus einem natürlichen und/oder synthetischem Zeolith, einem Alumosilikat, einem Alumophosphat und/oder einem Metallalumophosphat aufweist.

Die Membran ist dadurch gekennzeichnet, dass die trennaktive Schicht zumindest einen Kristall einer Verbindung ausgewählt aus den Zeolithen NaA, CaA, Erionit, ZSM-5, ZSM-11, ZSM-20, ZSM-22, ZSM-23, ZSM-35, ZSM-38, ZSM-48, ZSM-12, Beta, L, ZSM-4, Omega, X, Y, NaX, NaY, CaY, REY, US- Y, Mordenite, ZK-5, ZK-4, den Alumosilikaten, den Alumophosphaten, oder einer Kombination bzw. Mischungen daraus aufweist.

Die Membran ist dadurch gekennzeichnet, dass die trennaktive Schicht aus Metallalumophosphaten, den Metallaluminophosphosilikaten oder Mischungen dieser Verbindungen gebildet wird.

Metall-organische Gerüste (engl. metal-organic frameworks, MOF) sind mikroporöse kristalline Materialien, die aus metallischen Knotenpunkten, den sogenannten SBUs (Secondary Building Units) und organischen Molekülen (Linkern) als Verbindungselementen zwischen den Knotenpunkten aufgebaut sind. Es können ein-, zwei- und dreidimensional Netzwerke ausgebildet werden, wobei ein- und zweidimensionale Strukturen eher als Koordinationspolymere anzusehen sind, da sie keine Poren wie die dreidimensionalen Strukturen besitzen. Die Poren sind nach der Synthese mit Gastmolekülen (z. B. Lösungsmittel oder nicht umgesetzten Linkern) gefüllt. Durch die Entfernung der Gastmoleküle können die Poren zugänglich gemacht werden, wodurch jedoch auch einige Netzwerke kollabieren. Potentielle Anwendungsgebiete finden sich in Gasspeicherung (z. B. Wasserstoff, Methan), der Stofftrennung und Katalyse.

Daher wird hier vorgeschlagen, dass die trennaktive Schicht aus Materialien gebildet wird, die der Klasse der porösen Metall-organischen Gerüstverbindungen angehören. Es gibt neben der gebräuchlichen Abkürzung MOF noch eine große Vielfalt an Kurzbezeichnungen wie IRMOF (= IsoReticular Metal-Organic Framework), HKUST (= Hong Kong University of Science & Technology), MIL (= Materiaux de l'Institut Lavoisier), ZIF (= Zeolitic Imidazolate Frameworks), BAF (= BergAkademie Freiberg Framework), MFU (= Metal-Organic Framework Ulm University), TOF (= Thorium Organic Framework) usw.

Im Gegensatz zu Zeolithen, also anorganischen Kristallen mit Poren ähnlicher Größe, sind MOF weniger temperaturbeständig. Daher wird hier vorgeschlagen, dass die MOF-Schicht als trennaktive Schicht auf der Außenseite des Innenrohres (4) angebracht ist (vgl. Figur [2]). Da auf der Außenseite Lufttemperaturen in der Größenordnung der Raumtemperatur herrschen.

Die Membran ist dadurch gekennzeichnet, dass die trennaktive Schicht ein MOF der Formel Zn4O(BDC)3 ist. Der organische Ligand BDC wird durch 1,4-Benzoldicarboxyl gebildet.

Die Membran ist dadurch gekennzeichnet, dass die trennaktive Schicht ein MOF der Struktur CAU-10-H mit der Formel [Al(OH)(O₂C-C₆H₄-CO₂)] ist.

Die Membran ist dadurch gekennzeichnet, dass die trennaktive Schicht aus zirkoniumbasierten MOF's gebildet wird, z.B. MOF-801 mit der Formel Zr₆O₄(OH)₄(Furamate)₆ oder MOF UiO-66 mit der Formel Zr₆O₄(OH)₄(BDC)₆.

COFs sind eine andere Klasse poröser polymerer Materialien, welche porösen, kristallenen und kovalenten Verbindungen besteht und einen steife Struktur aufweisen. Dadurch ist die organische Verbindungsklasse auch bis 600°C temperaturstabil bei gleichzeitiger geringer Dichte und ähnlichen Eigenschaften wie poröse Silikate. Es wird daher auch vorgeschlagen, dass die trennaktive Schicht der Membran aus einem oder mehreren COF's aufgebaut wird.

### Membranaufbau

Die trennaktive Schicht (4) ist umhüllt von der Trägerstruktur der Membran. Die Membran ist dadurch gekennzeichnet, dass die trennaktive Schicht im Inneren des Trägermaterials außermittig zwischen den beiden Seiten des Trägermaterials angeordnet ist. Die Membran ist dadurch gekennzeichnet, dass die Membran flexibel ist.

### Verkeimung

Ein weiterer Nachteil von cellulose- und polymerbasierten Membranen ist, dass diese von Krankheitserregern besiedelt werden können. Insbesondere Bakterien, wie Listeria, E. coli, Salmonellen, sowie Staphylococcus aureus (S. aureus) und MRSA (Methicillin-resistant Staphylococcus aureus) stellen hier eine besondere Gefahr dar, aber auch anderen Mikrobenstämme können zu einer Besiedelung der Membranoberfläche führen und diese verstoffwechseln.

Um die Besiedelung von Keimen und Erregern zu verhindern, wird hier vorgeschlagen, dass die Membran mit einer Beschichtung versehen wird, die eine keimtötende Wirkung auf insbesondere auf die vorgenannten Keime und Erreger ausübt.

Die Membran ist dadurch gekennzeichnet, dass die zuluftseitige Oberfläche mit einer keimtötenden Beschichtung versehen ist.

Die Membran ist dadurch gekennzeichnet, dass die zuluftseitige Oberfläche mit einer keimtötenden Beschichtung versehen ist, wobei die Beschichtung aus Silbernitrat gebildet wird.

Die Membran ist dadurch gekennzeichnet, dass die zuluftseitige Oberfläche mit einer keimtötenden Beschichtung versehen ist; wobei die Beschichtung durch Dotierung der Oberfläche mit Silberionen der Oxidationsstufe 1 gebildet wird.

Die Membran ist dadurch gekennzeichnet, dass die zuluftseitige Oberfläche mit einer keimtötenden Beschichtung versehen ist, wobei die keimtötende Wirkung durch die Dotierung der Oberfäche mit Silberionen der Oxidationsstufe 3 gebildet wird.

Bei beiden Ausführungen wird das erhitze und wasserdampfgesättigte Abgas abgekühlt und getrocknet. Die Außenluft, welche zur Raumluft wird, wird befeuchtet und erwärmt, indem über die selektive Membran der Wasserdampf übergeht. Der Stofftransport des Wasserdampfes basiert auf dem Partialdruckunterschied zwischen Abgasseite und Luftseite. Zusätzliche Hilfsenergie ist nicht erforderlich. Das zusätzliche aufprägen eines statischen Druckes kann des Stoffüberganges des Wasserdampfes positiv beeinflussen.

Gegenstand der Erfindung ist die Nutzung von Verbrennungsabgasen als Feuchtigkeitsquelle für eine RLT- Anlage in Wohngebäuden. Hierbei findet eine Steigerung der Effizienz der Heizungsanlage statt, da das Abgas weiter genutzt wird, um die Raumluft zu erwärmen. Insbesondere jedoch kann die Raumluft kostenlos befeuchtet werden, weil das Wasser im Abgas bereits dampfförmig vorliegt; sodass ggf. sogar auf eine aktive Befeuchtung verzichtet werden kann, jedoch zu mindestens deren Einsatzzeiten reduziert wird.

Beide Ausführungen sind auch in Bestandsanlagen nachrüstbar, entweder durch den Austausch der Abgasrohre oder durch den Einbau des zusätzlichen Wärmeübertragers.

### Bezugszeichenliste:

- 1: Frische Außenluft
- 2: Außenrohr
- 3: Abgas
- 4: Innenrohr
- 5: Membran
- 6: Stützschicht
- 7: Abgasrohr

## Patentansprüche

1. Wärme- und Feuchteübertrager (7) zur Übertragung von thermischer Energie und Feuchte von einem ersten Medium auf ein zweites Medium, mit mindestens einem ersten Strömungskanal für das erste Medium und mindestens einem zweiten Strömungskanal für das zweite Medium, wobei zwischen dem ersten Strömungskanal und dem zweites Strömungskanal zumindest in Teilbereichen eine wasserdampfdurchgängige Membran (5) angeordnet ist, **dadurch gekennzeichnet,. dass** der erste Strömungskanal Abgase einer verbrennungstechnischen Anlage und der zweite Strömungskanal Frischluft eines Belüftungssystems führt.

2. Wärme- und Feuchteübertrager (7) nach Anspruch 1, **dadurch gekennzeichnet, dass** die Membran (5) eine trennaktive Schicht besitzt, welche eine polymere Verbindung aus Polyetheretherketone (PEEK) oder Polytetrafluorethylene (PTFE) oder sulfoniertes Tetrafluorethylen-Polymere oder
eine kristalline Verbindung aus einem natürlichen und/oder synthetischem Zeolith, einem Alumosilikat, einem Alumophosphat und/oder einem Metallalumophosphat aufweist.

3. Wärme- und Feuchteübertrager (7) nach Anspruch 2, **dadurch gekennzeichnet, dass** im Falle einer kristallinen Verbindung die trennaktive Schicht (5) zumindest einen Kristall einer Verbindung ausgewählt aus den Zeolithen NaA, CaA, Erionit, ZSM-5, ZSM-11, ZSM-20, ZSM-22, ZSM-23, ZSM-35, ZSM-38, ZSM-48, ZSM-12, Beta, L, ZSM-4, Omega, X, Y, NaX, NaY, CaY, REY, US- Y, Mordenite, ZK-5, ZK-4, den Alumosilikaten, den Alumophosphaten, oder einer Kombination bzw. Mischungen daraus aufweist.

4. Wärme- und Feuchteübertrager (7) nach Anspruch 2 oder 3, **dadurch gekennzeichnet, dass** die trennaktive Schicht (5) aus Metallalumophosphaten, den Metallaluminophosphosilikaten oder Mischungen dieser Verbindungen gebildet wird.

5. Wärme- und Feuchteübertrager (7) nach einem der Ansprüche 2 bis 4, **dadurch gekennzeichnet, dass** die trennaktive Schicht (5) auf einem Trägermaterial (6), vorzugsweise einer Keramikfolie synthetisiert wird.

6. Wärme- und Feuchteübertrager (7) nach einem der Ansprüche 2 bis 5, **dadurch gekennzeichnet, dass** die trennaktive Schicht (5) Poren, welche kleiner 10 nm, vorzugsweise 1 nm, 0,3 nm, 0,4 nm oder 0,5nm groß sind, aufweist.

7. Wärme- und Feuchteübertrager (7) nach einem der Ansprüche 2 bis 6, **dadurch gekennzeichnet, dass** die trennaktive Schicht (5) ein MOF der Formel Zn₄O(BDC)₃ ist, wobei der organische Ligand BDC durch 1,4-Benzoldicarboxyl gebildet wird.

8. Wärme- und Feuchteübertrager nach einem der Ansprüche 2 bis 7, **dadurch gekennzeichnet, dass** die trennaktive Schicht (5) ein MOF der Struktur CAU-10-H mit der Formel [Al(OH)(O₂C-C₆H₄-CO₂)] ist.

9. Wärme- und Feuchteübertrager nach einem der Ansprüche 2 bis 8, **dadurch gekennzeichnet, dass** die trennaktive Schicht (5) aus zirkoniumbasierten MOF's gebildet wird, vorzugsweise. MOF-801 mit der Formel Zr₆O₄(OH)₄(Furamate)₆ oder MOF UiO-66 mit der Formel Zr₆O₄(OH)₄(BDC)₆.

10. Wärme- und Feuchteübertrager (7) nach Anspruch 2, **dadurch gekennzeichnet, dass** im Falle einer polymeren Verbindung diese aus einem perfluorierten sulfonierten aciden Polymere bestehen.

11. Wärme- und Feuchteübertrager nach einem der Ansprüche 1 bis 10, **dadurch gekennzeichnet, dass** die Membran eine trennaktive Schicht besitzt, welche aus vernetzten und/oder nanostrukturierten Polyurethan-Polyeethern gebildet ist.

12. Wärme- und Feuchteübertrager nach einem der Ansprüche 1 bis 11, **dadurch gekennzeichnet, dass** die Membran eine trennaktive Schicht besitzt, welche eine kristalline Verbindung aus einem natürlichen und/oder synthetischem Zeolith, einem Alumosilikat, einem Alumophosphat und/oder einem Metallalumophosphat aufweist.

13. Wärme- und Feuchteübertrager nach einem der Ansprüche 1 bis 12, **dadurch gekennzeichnet, dass** die Membran (5) mit einer Trägerstruktur (6) verbunden ist.
